# EUROPÄISCHE PATENTSCHRIFT

(11) **EP 1 600 839 B1**
(45) Veröffentlichungstag und Bekanntmachung des Hinweises auf die Patenterteilung: **31.12.2008**
(21) Anmeldenummer: 05010552.7
(22) Anmeldetag: 14.05.2005
(51) Int. Cl.: G05D 7/01

(54) **Durchflussmengenregler**
Flow regulator
Regulateur de débit

(30) Priorität: 25.05.2004 DE 102004025465
(43) Veröffentlichungstag der Anmeldung: 30.11.2005
(73) Patentinhaber: Neoperl GmbH, 79379 Müllheim (DE)
(72) Erfinder: Zoller, Uwe, 79424 Auggen (DE)
(74) Vertreter: Maucher, Wolfgang

(56) Entgegenhaltungen:
- US-A- 2 960 109
- US-A- 3 189 125
- US-A- 3 630 236
- US-A- 4 867 198

## Beschreibung

Die Erfindung betrifft einen Durchflussmengenregler mit einem Reglergehäuse, in dem in einem Durchtrittskanal ein ringförmiger Drosselkörper aus elastischem Material vorgesehen ist, der zwischen sich und einem konischen Regelkern einen Steuerspalt begrenzt, dessen Durchtrittsquerschnitt durch den sich unter der beim Durchströmen bildenden Druckdifferenz verformenden Drosselkörper veränderbar ist, wobei der Regelkern zur Veränderung des maximalen Volumenstroms des Durchflussmengenreglers im Durchtrittskanal relativ zum Drosselkörper verstellbar ist.

Derartige Durchflussmengenregler sind bereits in verschiedenen Ausführungen bekannt, um den durchfließenden Volumenstrom auf einen Maximalwert zu begrenzen und zu vergleichmäßigen. Man hat auch bereits Durchflussmengenregler der eingangs genannten Art geschaffen, um den Volumenstrom und dessen druckunabhängigen Maximalwert verändern zu können.

Solche Durchflussmengenregler werden beispielsweise in die Wasserzuleitung eines Durchflusserhitzers zwischengeschaltet, um die jahreszeitlich bedingten Temperaturunterschiede des zufließenden Leitungswassers zu berücksichtigen. Die elektrische Leistung eines solchen Durchflusserhitzers ist nämlich konstant; deshalb ist im Sommer, wenn das zufließende Leitungswasser im Vergleich zum Winter regelmäßig bereits wärmer ist, ein größerer Wasserdurchfluss erforderlich, um das ausströmende Wasser auf dieselbe Temperatur zu bringen und um die im Sommer geringere Temperaturdifferenz zwischen dem zufließenden Leitungswasser einerseits und dem ausströmenden Wassers andererseits auszugleichen.

Es ist bereits bekannt, den Volumenstrom durch den Einsatz von Drosseln oder den Austausch der verwendeten Durchflussmengenregler zu verändern. In beiden Fällen muss jedoch der Wasserzufluss unterbrochen und die Wasserzuleitung geöffnet werden, was stets mit einem nicht unerheblichen Aufwand verbunden ist.

Aus der US 4 867 198 kennt man bereits einen Durchflussmengenregler, in dessen Reglergehäuse ein ringscheibenförmiger Drosselkörper aus elastischem Material vorgesehen ist, der zwischen sich und einem konischen Regelkern einen Steuerspalt begrenzt. Um den Durchflussquerschnitt des vorbekannten Durchflussmengenreglers an den Druck des zuströmenden Wassers anpassen zu können, ist der konische Regelkern im Reglergehäuse gegen eine Rückstellkraft derart verschieblich geführt, dass der Regelkern mit steigendem Wasserdruck zunehmend in die Schienenöffnung des ringscheibenförmigen Drosselkörpers bewegt wird und den lichten Durchflussquerschnitt im Bereich des Steuerspalts begrenzt. Dabei ist der Drosselkörper an einem inneren Gehäuseteil gehalten, das zum Verändern der in der Ausgangsstellung vorgesehenen Relativposition von Drosselkörper und Regelkern im Gehäuseinneren verschiebbar und festlegbar geführt ist.

Aus der US 3 630 236 kennt man bereits einen Durchflussbegrenzer, der einen ringscheibenförmigen Drosselkörper hat, in dessen Scheibenöffnung ebenfalls ein im wesentlichen konischer Regelkern eingreift. Dieser Regelkern weist einen V-förmigen Durchflusskanal auf, der nutartig in Längsrichtung des Regelkerns orientiert ist und mit Abstand unterhalb des freien zuströmseitigen Endes des Regelkerns beginnt. Der Regelkern ist im Gehäuse des vorbekannten Durchflussbegrenzers verstellbar und festlegbar geführt. Durch Einschrauben des Regelkerns und dessen zunehmendes Eindringen in die Scheibenöffnung kann gleichzeitig auch ein größerer Durchflussquerschnitt des Durchflusskanals derart freigelegt werden, dass die Durchflussleistung des vorbekannten Durchflussbegrenzers auf das gewünschte Maß einstellbar ist. Eine Vergleichmäßigung der Durchflussleistung, wie sie demgegenüber bei Durchflussmengenregler regelmäßig angestrebt wird, ist bei dem aus US 3 630 236 vorbekannten Durchflussbegrenzer demgegenüber nicht möglich.

Es besteht daher die Aufgabe, einen Durchflussmengenregler der eingangs erwähnten Art zu schaffen, bei dem der druckunabhängige maximale Volumenstrom mit einem wesentlich geringeren Aufwand veränderbar ist.

Die erfindungsgemäße Lösung dieser Aufgabe besteht bei dem Durchflussmengenregler der eingangs erwähnten Art in den Merkmalen des geltenden Patentanspruchs 1.

Der erfindungsgemäße Durchflussmengenregler weist ein inneres Gehäuseteil auf, das im Reglergehäuse relativ zum Drosselkörper verschieblich geführt ist. Das innere Gehäuseteil ist über ein Steuerelement bedienbar, das am Außenumfang des inneren Gehäuseteiles nach außen vorsteht. Das innere Gehäuseteil wird beidseits seines Steuerelements von einem äußeren Gehäuseabschnitt dichtend umgriffen, welche äußeren Gehäuseabschnitte zueinander ortsfest angeordnet sind. Das innere Gehäuseteil trägt den konischen Regelkern, so dass dieser konische Regelkern relativ zum Drosselkörper derart verschoben werden kann, dass sich durch die Konizität des Regelkerns der zwischen Drosselkörper und Regelkern vorgesehene Steuerspalt und mit ihm der maximale Volumenstrom des Durchflussmengenreglers verändert. Da das innere verschiebliche Gehäuseteil von den äußeren Gehäuseabschnitten dichtend umgriffen wird, und da das Steuerelement am inneren Gehäuseteil nach außen vorsteht, ist der Volumenstrom des erfindungsgemäßen Durchflussmengenreglers auf einfache Weise veränderbar, ohne dass dazu eine Demontage des Durchflussmengenreglers erforderlich ist. Da die das innere Gehäuseteil dichtend umgreifenden äußeren Gehäuseabschnitte zueinander ortsfest angeordnet sind, ist mit einer Verschiebung des inneren Gehäuseteiles und des davon getragenen Regelkerns und mit einer Veränderung des Volumenstroms nicht zwangsläufig eine Veränderung der Baulänge des erfindungsgemäßen Durchflussmengenreglers verbunden. Der erfindungsgemäße Durchflussmengenregler lässt sich daher auch in starren Rohrleitungen ohne weiteres einsetzen.

Besonders vorteilhaft ist es, wenn das innere Gehäuseteil von einer Endstellung gegen eine Rückstellkraft in Richtung zu einer anderen Endstellung verschiebbar und festlegbar ist.

Dabei ist es zweckmäßig, wenn als Rückstellkraft eine Rückstellfeder vorgesehen ist.

Eine Weiterbildung gemäß der Erfindung von eigener schutzwürdiger Bedeutung sieht vor, dass die Rückstellkraft am Außenumfang des inneren Gehäuseteiles, vorzugsweise an dessen Steuerelement, angreift. Bei dieser Ausführungsform ist das Rückstellelement außerhalb des eventuell flüssigen Volumenstroms angeordnet, so dass eine Berührung des Rückstellelements mit der den Durchflussmengenregler durchströmenden Flüssigkeit und eine flüssigkeitsbedingte Korrosion des beispielsweise als metallische Rückstellfeder ausgebildeten Rückstellelements vermieden wird.

Um den Durchtrittskanal möglichst gut abzudichten, ist es vorteilhaft, wenn zwischen dem inneren Gehäuseteil und den äußeren Gehäuseabschnitten jeweils zumindest eine Ringdichtung vorgesehen ist.

Besonders vorteilhaft ist es, wenn ein erstes äußeres Gehäuseteil das Steuerelement des inneren Gehäuseteiles übergreift und mit einem zweiten äußeren Gehäuseteil verschraubt oder dergleichen verbunden ist, wenn am Steuerelement des inneren Gehäuseteiles wenigstens ein axialer Zapfen angeformt ist und wenn der zumindest eine axiale Zapfen eine zugeordnete Gehäuseöffnung des ersten äußeren Gehäuseteils durchsetzt.

Dabei sieht eine bevorzugte Ausführungsform gemäß der Erfindung vor, dass das erste äußere Gehäuseteil ein Außengewinde trägt, auf welchem Außengewinde eine Stellschraube angeordnet ist und dass die Stellschraube das freie Ende des zumindest einen Zapfen beaufschlagt. Durch Drehen an der Stellschraube und Verstellen ihrer Relativposition am ersten äußeren Gehäuseteil wird über den zumindest einen axialen Zapfen auch das innere Gehäuseteil derart verschoben, dass der Volumenstrom auf einfache Weise verändert werden kann.

Um die Drehbewegung an der Stellschraube in eine gleichmäßige axiale Verschiebung des inneren Gehäuseteiles und des von ihm getragenen Regelkerns umzusetzen, ist es vorteilhaft, wenn das Steuerelement als Ringflansch ausgestaltet ist und/oder wenn das Steuerelement zumindest zwei, in Umfangsrichtung vorzugsweise gleichmäßig voneinander beabstandete Zapfen trägt.

Um den erfindungsgemäßen Durchflussmengenregler auf einfache Weise gegebenenfalls auch in eine axiale Rohrleitung einbauen und zwischenschalten zu können, ist es vorteilhaft, wenn die beiden äußeren Gehäuseteile jeweils einen Leitungsanschluss zum Anschluss an eine Rohrleitung aufweisen.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
Fig. 1 einen in einem Längsschnitt dargestellten und zum Einbau in eine sanitäre Wasserleitung bestimmten Durchflussmengenregler mit einem verschiebbaren Regelkern, wobei der Regelkern hier in seiner einen Endstellung abgebildet ist,
Fig. 2 den Druckabhängigen Volumenstrom des in Figur 1 gezeigten Durchflussmengenreglers in der in Figur 1 dargestellten Endstellung,
Fig. 3 den Durchflussmengenregler aus Figur 1 in der anderen Endstellung seines Regelkerns,
Fig. 4 den druckabhängigen Volumenstrom des in den Figuren 1 und 3 gezeigten Durchflussmengenreglers in der in Figur 3 dargestellten Endstellung,
Fig. 5 den Durchflussmengenregler aus Figur 1 und 3 in einem Querschnitt durch Schnittebene A-A aus Figur 3, und
Fig. 6 den Durchflussmengenregler aus Figur 1, 3 und 5 in einem Querschnitt durch Schnittebene B-B aus Figur 3.

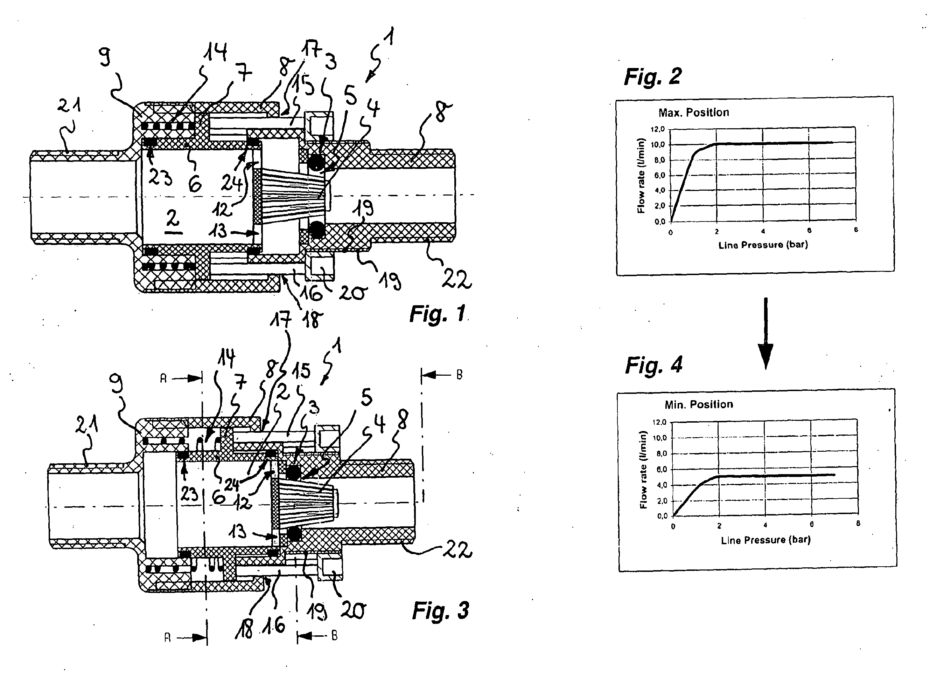

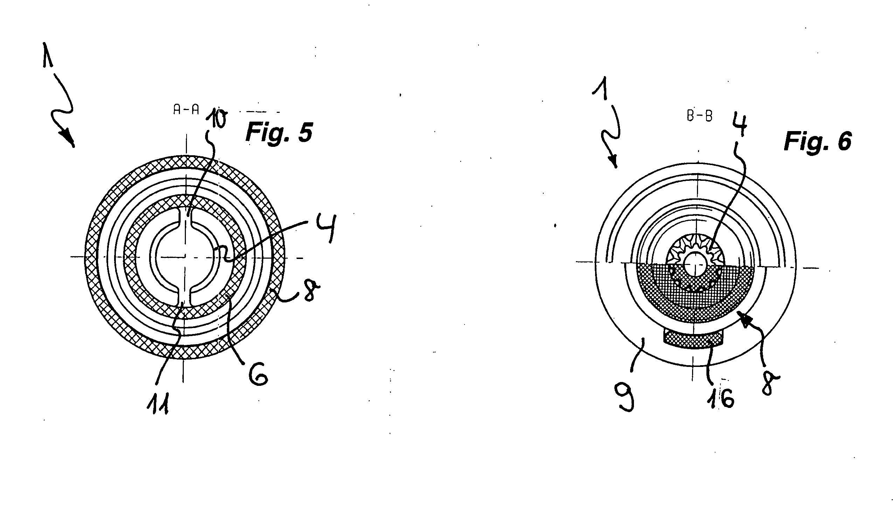

In den Figuren 1, 3, 5 und 6 ist ein Durchflussmengenregler 1 in verschiedenen Ansichten dargestellt, der zum Einbau in eine sanitäre Wasserleitung bestimmt ist. Wie aus einer zusammenschauenden Betrachtung der Figuren 2 und 4 deutlich wird, lässt sich mit Hilfe des Durchflussmengenreglers 1 der durch den Durchflussmengenregler 1 durchfließende Volumenstrom begrenzen und auf einen Maximalwert vergleichmäßigen.

Der Durchflussmengenregler 1 weist ein mehrteiliges Reglergehäuse auf, in dem in einem Durchtrittskanal 2 ein ringförmiger Drosselkörper 3 aus elastischem Material vorgesehen ist. Dieser Drosselkörper 3 begrenzt zwischen sich und einem konischen, d.h. kegelförmigen oder kegelstumpfförmigen Regelkern 4 einen Steuerspalt 5, dessen Durchtrittsquerschnitt durch den sich unter der beim Durchströmen bildenden Druckdifferenz verformenden Drosselkörper 3 veränderbar ist. Um den Volumenstrom verändern und beispielsweise auf die in den Figuren 2 und 4 gezeigten unterschiedlichen Maximalwerte einstellen zu können, ist der Regelkern 4 des hier gezeigten Durchflussmengenreglers 1 im Durchtrittskanal 2 relativ zum Drosselkörper 3 verstellbar.

Das Reglergehäuse des Durchflussmengenreglers 1 weist dazu ein inneres Gehäuseteil 6 auf, das im Reglergehäuse verschieblich geführt ist. Das innere Gehäuseteil 6 trägt an seinem Außenumfang ein nach außen vorstehendes und hier als Ringflansch ausgebildetes Steuerelement 7. Das innere Gehäuseteil 6 ist beidseits seines Steuerelements 7 von einem äußeren Gehäuseabschnitt 8, 9 dichtend umgriffen. Die äußeren Gehäuseabschnitte 8, 9 sind ortsfest zueinander angeordnet. Während der Drosselkörper 3 in einer Ringnut an einem der äußeren Gehäuseabschnitte 8, 9 gehalten ist, trägt das verschiebliche innere Gehäuseteil 6 den konischen Regelkern 4. Der Regelkern 4 ist dazu auf der dem Drosselkörper 3 zugewandten Stirnseite des verschieblichen Gehäuseteils 6 angeordnet. Der Regelkern 4 weist einen gegenüber dem lichten Innenumfang des Gehäuseteiles 6 reduzierten Außenumfang auf und ist über zwei Stege 10, 11 mit dem hülsenförmigen Umfangsmantel des inneren Gehäuseteils 6 verbunden. Die Stege 10, 11 begrenzen zwischen sich und dem Umfangsmantel des Gehäuseteiles 6 einerseits beziehungsweise dem Regelkern 4 andererseits Durchtrittsöffnungen 12, 13, so dass das Strömungsmedium den Durchflussmengenregler 1 durch das innere Gehäuseteil 6 durchströmen kann.

Aus einem Vergleich der Figuren 1 und 3 wird deutlich, dass das innere Gehäuseteil 6 von einer Endstellung gegen die Rückstellkraft einer metallischen und insbesondere aus Edelstahl bestehenden Rückstellfeder 14 in Richtung zu einer anderen Endstellung verschiebbar und festlegbar ist. Die Rückstellfeder 14 greift am flanschförmigen Steuerelement 7 des inneren Gehäuseteiles 6 an und stützt sich mit seinem anderen Federende am Reglergehäuse ab. Da die Rückstellfeder 14 somit außerhalb des Flüssigkeitsstroms angeordnet ist, ist die Rückstellfeder 14 gegen die korrodierende Wirkung dieser Flüssigkeit geschützt untergebracht.

Die Gehäuseabschnitte 8, 9 können Bestandteil eines einstückigen Gehäuseteiles sein. Aus den Figuren 1 und 3 wird jedoch deutlich, dass die Gehäuseabschnitte des hier dargestellten Durchflussmengenreglers 1 durch zwei Gehäuseteile 8, 9 gebildet sind, von denen ein erstes Gehäuseteil 8 das Steuerelement 7 und die Rückstellfeder 14 übergreift und mit einem zweiten Gehäuseteil 9 verschraubt ist. Am flanschförmigen Steuerelement 7 sind zwei, in Umfangsrichtung gleichmäßig voneinander beabstandete und auf gegenüberliegenden Seiten des Steuerelements 7 angeordnete axiale Zapfen 15, 16 angeformt, die jeweils eine zugeordnete Gehäuseöffnung 17, 18 des glockenförmig ausgebildeten ersten Gehäuseteiles 8 durchsetzen. Das erste Gehäuseteil 8 trägt ein Außengewinde 19, auf das das Innengewinde einer Stellschraube 20 aufgeschraubt ist. Diese Stellschraube 20 beaufschlagt die freien Enden der Zapfen 15, 16 derart, dass ein Verdrehen der Stellschraube 20 in eine axiale Verschiebung des inneren Gehäuseteiles 6 und seines Regelkerns 4 umgesetzt wird.

Aus den Figuren 1, 3 und 6 ist erkennbar, dass der Regelkern 4 eine sternförmige Regelprofilierung trägt. Darüber hinaus sind die am inneren Gehäuseteil 6 beidseits gehaltenen Ringdichtungen 23, 24 zu sehen, die jeweils zwischen dem inneren Gehäuseteil 6 und dem benachbarten äußeren Gehäuseteil 8, 9 abdichten.

Die beiden äußeren Gehäuseteile 8, 9 tragen an ihren einander abgewandten Stirnseiten jeweils einen Anschlussstutzen oder dergleichen Leitungsanschluß 21, 22 mit einem Anschlussgewinde zum Anschluss des Durchflussmengenreglers 1 an eine gegebenenfalls auch starre Rohrleitung.

Da das innere verschiebliche Gehäuseteil 6 von den äußeren Gehäuseabschnitten 8, 9 dichtend umgriffen wird, und da das Steuerelement 7 am inneren Gehäuseteil 6 nach außen vorsteht, ist der Volumenstrom des hier dargestellten Durchflussmengenreglers 1 auf einfache Weise veränderbar, ohne dass dazu eine Demontage des Durchflussmengenreglers 1 erforderlich ist. Da die das innere Gehäuseteil 6 dichtend umgreifenden äußeren Gehäuseabschnitte 8, 9 zueinander ortsfest angeordnet sind, ist mit einer Verschiebung des inneren Gehäuseteiles 6 und des davon getragenen Regelkerns 4 und mit einer Veränderung des Volumenstroms nicht zwangsläufig eine Veränderung der Baulänge des Durchflussmengenreglers 1 verbunden. Der hier dargestellte Durchflussmengenregler 1 lässt sich daher auch in starren Rohrleitungen ohne weiteres einsetzen.

Der hier dargestellte Durchflussmengenregler 1 wird beispielsweise in die Wasserzuleitung eines Durchflusserhitzers zwischengeschaltet, um die jahreszeitlich bedingten Temperaturunterschiede des zufließenden Leitungswassers zu berücksichtigen. Die elektrische Leistung eine solchen Durchflusserhitzers ist nämlich konstant; deshalb ist im Sommer, wenn das zufließende Leitungswasser im Vergleich zum Winter regelmäßig bereits wärmer ist, ein größerer Wasserdurchfluss erforderlich, um das ausströmende Wasser auf dieselbe Temperatur zu bringen und um die im Sommer geringere Temperaturdifferenz zwischen dem zufließenden Leitungswasser einerseits und dem ausströmenden Wasser andererseits auszugleichen.

Darüber hinaus kann der Einsatz des hier dargestellten Durchflussmengenreglers 1 dort sinnvoll sein, wo zum Ausgleich von Fertigungstoleranzen oder zum Ausgleich von Streuungen des Mengenreglers oder der restlichen hydraulischen Einheit eine Endjustage auf genau den benötigten Volumenstrom notwendig ist.

## Patentansprüche

1. Durchflussmengenregler (1) mit einem Reglergehäuse, in dem in einem Durchtrittskanal (2) ein ringförmiger Drosselkörper (3) aus elastischem Material vorgesehen ist, der zwischen sich und einem konischen Regelkern (4) einen Steuerspalt (5) begrenzt, dessen Durchtrittsquerschnitt durch den sich unter der beim Durchströmen bildenden Druckdifferenz verformenden Drosselkörper veränderbar ist, wobei der Regelkern (4) zur Veränderung des maximalen Volumenstroms des Durchflussmengenreglers (1) im Durchtrittskanal (2) relativ zum Drosselkörper (3) verstellbar ist, **wobei** das Reglergehäuse ein inneres verschiebliches Gehäuseteil (6) hat, welches innere Gehäuseteil (6) an seinem Außenumfang zumindest ein nach außen vorstehendes Steuerelement (7) aufweist, **wobei** das innere Gehäuseteil (6) beidseits seines Steuerelements (7) von einem äußeren Gehäuseabschnitt (8, 9) dichtend umgriffen ist, welche äußeren Gehäuseabschnitte (8, 9) zueinander ortsfest angeordnet sind, **wobei** das innere verschiebliche Gehäuseteil (6) den Regelkern (4) trägt, und **wobei** der Drosselkörper (3) an einem der äußeren Gehäuseabschnitte (8, 9) gehalten ist.

2. Durchflussmengenregler nach Anspruch 1, **dadurch gekennzeichnet, dass** das innere Gehäuseteil (6) von einer Endstellung gegen eine Rückstellkraft in Richtung zu einer anderen Endstellung verschiebbar und festlegbar ist.

3. Durchflussmengenregler nach Anspruch 1 oder 2, **dadurch gekennzeichnet, dass** als Rückstellkraft eine Rückstellfeder (14) vorgesehen ist.

4. Durchflussmengenregler nach einem der Ansprüche 1 bis 3,
**dadurch gekennzeichnet, dass** die Rückstellkraft am Außenumfang des inneren Gehäuseteiles (6), vorzugsweise an dessen Steuerelement (7), angreift.

5. Durchflussmengenregler nach einem der Ansprüche 1 bis 4, **dadurch gekennzeichnet, dass** zwischen dem inneren Gehäuseteil (6) und den äußeren Gehäuseabschnitten (8, 9) jeweils zumindest eine Ringdichtung (23, 24) vorgesehen ist.

6. Durchflussmengenregler nach einem der Ansprüche 1 bis 5, **dadurch gekennzeichnet, dass** ein erstes äußeres Gehäuseteil (8) das Steuerelement (7) des inneren Gehäuseteiles (6) übergreift und mit einem zweiten äußeren Gehäuseteil (9) verschraubt oder dergleichen verbunden ist, dass am Steuerelement (7) des inneren Gehäuseteiles (6) wenigstens ein axialer Zapfen (15, 16) angeformt ist, und dass der zumindest eine axiale Zapfen (15, 16) eine zugeordnete Gehäuseöffnung (17, 18) des ersten Gehäuseteiles (8) durchsetzt.

7. Durchflussmengenregler nach einem der Ansprüche 1 bis 6, **dadurch gekennzeichnet, dass** das erste äußere Gehäuseteil (8) ein Außengewinde (19) trägt, auf welchem Außengewinde (19) eine Stellschraube (20) angeordnet ist, und dass die Stellschraube (20) das freie Ende des zumindest einen Zapfens (15, 16) beaufschlagt.

8. Durchflussmengenregler nach einem der Ansprüche 1 bis 7, **dadurch gekennzeichnet, dass** das Steuerelement (7) als Ringflansch ausgestaltet ist und/oder dass das Steuerelement (7) zumindest zwei, in Umfangsrichtung vorzugsweise gleichmäßig voneinander beabstandete Zapfen (15, 16) trägt.

9. Durchflussmengenregler nach einem der Ansprüche 1 bis 8, **dadurch gekennzeichnet, dass** die beiden äußeren Gehäuseteile (8, 9) jeweils einen Leitungsanschluss (21, 22) zum Anschluss an eine Rohrleitung aufweisen.

## Claims

1. Flow regulator (1) having a regulator housing in which is provided, in a throughflow channel (2), an annular throttle member (3) made of resilient material which defines, between itself and a conical regulating core (4), a control slot (5), the cross-section of passage of which can be changed by the throttle member deforming under the pressure difference that is created during flow, the regulating core (4) being movable relative to the throttle member (3) in order to vary the maximum volume flow of the flow regulator (1) in the throughflow channel (2), **wherein** the regulator housing has an inner, movable housing part (6), this inner housing part (6) comprising on its outer periphery at least one outwardly projecting control element (7), **wherein** the inner housing part (6) is sealingly surrounded on both sides of its control element (7) by an outer housing portion (8, 9), said outer housing portions (8, 9) being arranged in fixed manner relative to one another, **wherein** the inner movable housing portion (6) carries the regulating core (4), and **wherein** the throttle member (3) is held on one of the outer housing portions (8, 9).

2. Flow regulator according to claim 1, **characterised in that** the inner housing part (6) can be moved from one end position counter to a restoring force towards another end position and secured there.

3. Flow regulator according to claim 1 or 2, **characterised in that** a restoring spring (14) is provided as the restoring force.

4. Flow regulator according to one of claims 1 to 3, **characterised in that** the restoring force acts on the outer circumference of the inner housing part (6), preferably on the control element (7) thereof.

5. Flow regulator according to one of claims 1 to 4, **characterised in that** at least one ring seal (23, 24) is provided in each case between the inner housing part (6) and the outer housing portions (8, 9).

6. Flow regulator according to one of claims 1 to 5, **characterised in that** a first outer housing part (8) engages over the control element (7) of the inner housing part (6) and is screwed or similarly connected to a second outer housing part (9), such that at least one axial peg (15, 16) is formed on the control element (7) of the inner housing part (6), and **in that** the at least one axial peg (15, 16) passes through an associated housing opening (17, 18) in the first housing part (8).

7. Flow regulator according to one of claims 1 to 6, **characterised in that** the first outer housing part (8) has an external thread (19) on which (19) is arranged an adjusting screw (20), and **in that** the adjusting screw (20) acts on the free end of the at least one peg (15, 16).

8. Flow regulator according to one of claims 1 to 7, **characterised in that** the control element (7) is in the form of a ring flange and/or the control element (7) carries at least two pegs (15, 16) which are preferably evenly spaced from one another in the circumferential direction.

9. Flow regulator according to one of claims 1 to 8, **characterised in that** the two outer housing parts (8, 9) each have a pipe connection (21, 22) for connecting to a pipe.

## Revendications

1. Régulateur de débit (1), avec un boîtier de régulateur dans lequel est prévu, dans un canal de passage (2), un corps d'étranglement annulaire (3) en matériau élastique qui délimite entre lui-même et un élément central de régulation conique (4) une fente de commande (5) dont la section de passage peut être modifiée par le corps d'étranglement qui se déforme sous l'effet de la différence de pression qui s'établit lors de l'écoulement, sachant que l'élément central de régulation (4) peut être déplacé par rapport au corps d'étranglement (3) dans le canal de passage (2) afin de modifier le débit volumique maximal du régulateur de débit (1), sachant que le boîtier de régulateur possède une partie intérieure de boîtier coulissante (6) qui présente sur sa périphérie extérieure au moins un élément de commande (7) dépassant vers l'extérieur, sachant que la partie intérieure de boîtier (6) est entourée en étanchéité par une partie extérieure de boîtier (8, 9) de chaque côté de son élément de commande (7), les parties extérieures de boîtier (8, 9) étant disposées stationnairement l'une par rapport à l'autre, sachant que la partie intérieure de boîtier coulissante (6) porte l'élément central de régulation (4) et sachant que le corps d'étranglement (3) est maintenu sur une des parties extérieures de boîtier (8, 9).

2. Régulateur de débit selon la revendication 1, **caractérisé en ce que** la partie intérieure de boîtier (6) peut être coulissée d'une position finale vers une autre position finale à l'encontre d'une force de rappel, et peut être fixée en position.

3. Régulateur de débit selon la revendication 1 ou 2, **caractérisé en ce qu'**un ressort de rappel (14) est prévu comme force de rappel.

4. Régulateur de débit selon l'une des revendications 1 à 3, **caractérisé en ce que** la force de rappel agit sur la périphérie extérieure de la partie intérieure de boîtier (6), de préférence sur son élément de commande (7),

5. Régulateur de débit selon l'une des revendications 1 à 4, **caractérisé en ce qu'**au moins un joint d'étanchéité annulaire respectif (23, 24) est prévu entre la partie intérieure de boîtier (6) et les parties extérieures de boîtier (8, 9).

6. Régulateur de débit selon l'une des revendications 1 à 5, **caractérisé en ce qu'**une première partie extérieure de boîtier (8) engage en recouvrement l'élément de commande (7) de la partie intérieure de boîtier (6) et est assemblée à une deuxième partie extérieure de boîtier (9) par vissage ou analogue, **en ce qu'**au moins un tenon axial (15, 16) est formé sur l'élément de commande (7) de la partie intérieure de boîtier (6), et **en ce que** le tenon axial au moins unique (15, 16) traverse une ouverture de boîtier associée (17, 18) de la première partie de boîtier (8).

7. Régulateur de débit selon l'une des revendications 1 à 6, **caractérisé en ce que** la première partie extérieure de boîtier (8) porte un filetage extérieur (18) sur lequel est disposée une vis de réglage (20), et **en ce que** la vis de réglage (20) sollicite l'extrémité libre du tenon axial au moins unique (15, 16).

8. Régulateur de débit selon l'une des revendications 1 à 7, **caractérisé en ce que** l'élément de commande (7) est réalisé sous forme de bride annulaire, et/ou **en ce que** l'élément de commande (7) porte au moins deux tenons (15, 16) de préférence uniformément espacés en direction périphérique.

9. Régulateur de débit selon l'une des revendications 1 à 8, **caractérisé en ce que** les deux parties extérieures de boîtier (8, 9) présentent respectivement un branchement de conduite (21, 22) pour le raccordement à une tuyauterie.
